# EUROPEAN PATENT SPECIFICATION

(11) **EP 2 502 767 B1**
(45) Date of publication and mention of the grant of the patent: **10.01.2018**
(21) Application number: 10831380.0
(22) Date of filing: 25.08.2010
(51) Int. Cl.: B60H 1/22, B60H 1/32, B60K 11/04, F25B 1/00, B60L 1/00, B60K 11/08, B60L 3/00, B60L 11/18, B60H 1/00, B60H 1/14

(54) **AIR CONDITIONING SYSTEM FOR VEHICLE**
KLIMAANLAGENSYSTEM FÜR EIN FAHRZEUG
SYSTÈME DE CLIMATISATION POUR VÉHICULE

(30) Priority: 18.11.2009 JP 2009262529
(43) Date of publication of application: 26.09.2012
(73) Proprietor: Hitachi, Ltd., Chiyoda-ku Tokyo 100-8280 (JP)
(72) Inventor: SEKIYA, Sachio, Tokyo 1008220 (JP); OSAKA, Tadashi, Tokyo 1008220 (JP); SAWADA, Itsuro, Tokyo 1008220 (JP); IMANISHI, Yuto, Tokyo 1008220 (JP)
(74) Representative: MERH-IP Matias Erny Reichl Hoffmann Patentanwälte PartG mbB
(86) International application number: PCT/JP2010/064389
(87) International publication number: WO 2011/061981

(56) References cited:
- JP-A- 6 171 346
- JP-A- 2000 320 331
- JP-A- 2002 248 932
- JP-A- 2006 127 968
- US-A- 6 148 910
- US-A1- 2005 178 523
- US-B1- 6 192 838

## Description

### TECHNICAL FIELD

The present invention relates to an air-conditioning system for a vehicle. The application claims priority of the Japanese Patent Application No. 2009-262529 (filed November 18, 2009).

### BACKGROUND ART

In the field of hybrid vehicles, there is known a system that uses, for air-conditioning, heat released from an heat-generating body such as a motor or an inverter installed in a vehicle (see Japanese Patent No. 4285292). When air-heating of a vehicle interior is performed, cooling water warmed by the heat-generating body is made to flow into a heat exchanger for air-conditioning of the vehicle interior so that it can serve as a subsidiary air-heating heat exchanger.

US Patent Application Publication No. US 2005/178523 A1 discloses an automotive air conditioning system according to the preamble of claim 1, that has a primary hot water circuit located on a side where a vehicle installed heat generator is located and a secondary hot water circuit which includes a hot water type heater core for heating passenger compartment outlet air, whereby when in a heating mode, in the event that a coolant temperature of the primary hot water circuit is lower than a coolant temperature of the secondary hot water circuit, an opening and closing valve is closed, whereas an opening and closing valve is opened, so that a state is created in which the hot water circuits are separated from each other. On the other hand, in the event that the coolant temperature of the primary hot water circuit becomes higher than the coolant temperature of the secondary hot water circuit, the opening and closing valve is opened, whereas the opening and closing valve is closed, so that a state is created in which the hot water circuits are connected to each other.

### SUMMARY OF INVENTION

### TECHNICAL PROBLEM

However, the conventional heat-generating body such as a motor or an inverter is covered with a casing made of a metal and the generated heat is released to external air. As a result, there has been a problem that the heat of the heat-generating body is released wastefully and has not been efficiently used for air-heating of the vehicle interior.

### SOLUTION TO PROBLEM

In view of the above problem, the present invention proposes an air-conditioning system having the features of claim 1. Preferred embodiments of the invention are described in the dependent claims.

According to a first aspect of the present invention, an air-conditioning system for a vehicle comprises an air-conditioning apparatus having a compressor that compresses a first refrigerant and a first heat exchanger that exchanges heat between the first refrigerant and external air and performing temperature regulation of air in a vehicle interior of the vehicle; an equipment cooling apparatus that circulates a second refrigerant between equipment for electrically driving the vehicle and a second heat exchanger to release heat absorbed from the equipment to the air in the vehicle interior in the second heat exchanger, wherein the air-conditioning system further comprises a heat-radiation suppressing structure that suppresses heat dissipation from the equipment to surrounding environment.

According to a second aspect of the present invention, in an air-conditioning system for a vehicle according to the 1st aspect, it is preferred that the heat-radiation suppressing structure comprises an heat insulating member that covers the equipment as the heat-release preventing structure.

According to a third aspect of the present invention, in an air-conditioning system for a vehicle according to the 1st aspect, it is preferred that the heat-radiation suppressing structure comprises a shielding member that is provided between the first heat exchanger and the equipment and shields the equipment from external air that has passed through the first heat exchanger.

According to a fourth aspect of the present invention, in an air-conditioning system for a vehicle according to the 3rd aspect, it is preferred that the shielding member comprises a duct that accommodates therein the first heat exchanger, the duct including a first channel for guiding external air that has passed through the first heat exchanger to the equipment, a second channel for discharging the external air that has passed through the first heat exchanger to outside the vehicle, and a wind distributing unit that switches between the first and second channels to distribute the external air that has passed through the first heat exchanger.

According to a fifth aspect of the present invention, in an air-conditioning system for a vehicle according to the 1st aspect, it is preferred that the equipment for driving the vehicle comprises a plurality of pieces of equipment as the vehicle for driving the vehicle and the heat-radiation suppressing structure has a layout of the plurality of pieces of the equipment such that a piece of equipment among the plurality of pieces of the equipment having a larger amount of heat generation is arranged at a position further down stream in a flow of the second refrigerant, and a piece of equipment having the largest amount of heat generation among the plurality of pieces of the equipment is provided close to the second heat exchanger.

According to a sixth aspect of the present invention, in an air-conditioning system for a vehicle according to any one of 1st through 5th aspects, it is preferred that the comprises a third heat exchanger that exchanges heat between the first refrigerant and the second refrigerant.

### ADVANTAGEOUS EFFECT OF THE INVENTION

According to the present invention, the heat radiation from equipment to surrounding environment is suppressed and the heat absorbed from the equipment can be released to the air in the vehicle interior efficiently.

### BRIEF DESCRIPTION OF THE DRAWINGS

[FIG. 1] FIG. 1 is a schematic diagram showing an air-conditioning system for a vehicle according to the present invention;
[FIG. 2] FIG. 2 is a diagram illustrating operation of the system during air-cooling operation;
[FIG. 3] FIG. 3 is a diagram illustrating operation of the system during defrosting operation;
[FIG. 4] FIG. 4 is a diagram showing a first example of a heat-release suppressing structure;
[FIG. 5] FIG. 5 is a diagram showing a second example of a heat-release suppressing structure;
[FIG. 6] FIG. 6 is a diagram showing a third example of a heat-release suppressing structure; and
[FIG. 7] FIG. 7 is a diagram showing a fourth example of heat-release suppressing structure.

### DESCRIPTION OF EMBODIMENTS

Hereafter, an embodiment is explained, in which the air-conditioning system for a vehicle according to the present invention is applied to an electric vehicle. Note that the present invention is not limited to electric vehicles but also is applicable to hybrid vehicles, and to electromotor vehicles of electric railways, construction vehicles and the like. According to the above-mentioned embodiment, explanation is made with reference to an example of an alternate current motor driven by an inverter. However, the present invention is not limited to the alternate current motor but can be applied to all types of rotating machines (motor generators) such as a direct current motor that can be driven by a converter, such as a thyristor Leonard device or a pulse motor that can be driven with chopper power source.

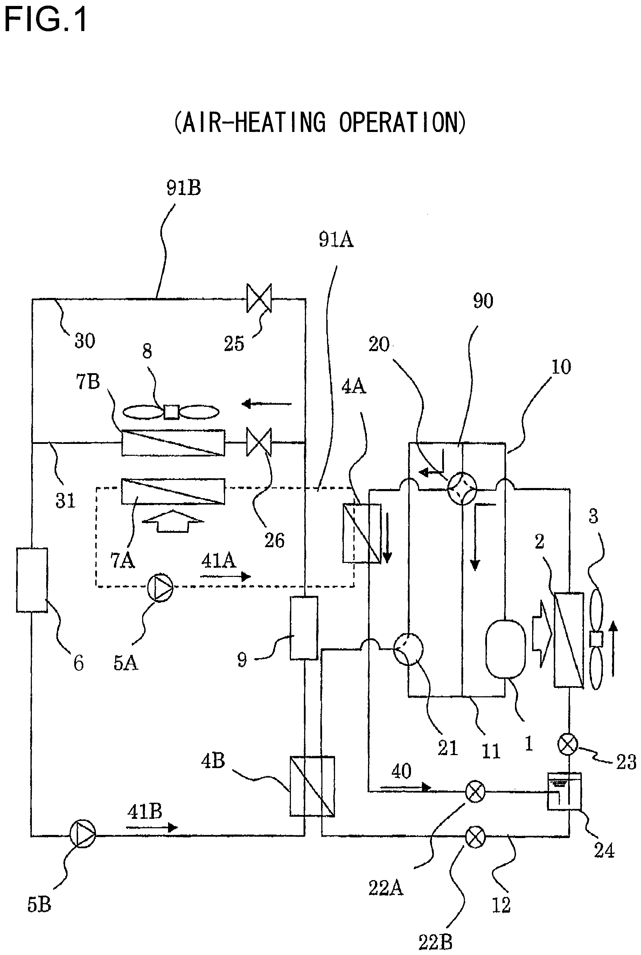

FIG. 1 is a diagram showing schematic construction of the air-conditioning system for a vehicle according to the present invention. The air-conditioning system for a vehicle shown in FIG. 1 includes a refrigeration cycle circuit 90 in which a refrigerant 40 flows, an air-conditioning circuit 91A having an interior heat exchanger 7A connected to the refrigeration cycle circuit 90 with an air-conditioning cooling medium 41A, and an equipment cooling circuit 91B having an interior heat exchanger 7B, the heat-generating body 9, and the refrigeration cycle circuit 90 with an equipment cooling medium 41B.

In the refrigeration cycle circuit 90, a compressor 1 that compresses the refrigerant 40, an exterior heat exchanger 2 that exchanges heat between the refrigerant 40 and external air, a liquid piping 12, an air-conditioning heat exchanger 4A that exchanges heat with the air-conditioning cooling medium 41A in the air-conditioning circuit 91A are connected in a circulating manner. A four-way valve 20 is provided between an intake piping 11 and a discharge piping 10. By switching the four-way valve 20, either one of the intake piping 11 and the discharge piping 10 can be connected to the exterior heat exchanger 2 and the other of the intake pipe 11 and the discharge pipe 10 can be connected to the air-conditioning heat exchanger 4A. FIG. 1 shows the air-heating operation, in which the four-way valve 20 is switched to connect the discharge piping 10 to the air-conditioning heat exchanger 4A and the intake piping 11 to the exterior heat exchanger 2.

The cooling heat exchanger 4B exchanges heat between the refrigerant 40 of the refrigeration cycle circuit 90 and the equipment cooling medium 41B. The cooling heat exchanger 4B is connected on one end thereof to the liquid piping 12 and on the other end thereof switchably connected to either one of the discharge pipe 10 and the intake pipe 11throuth a three-way valve 21. The liquid piping 12 is provided with a receiver 24. Expansion valves 23, 22A, and 22B that serve as flow rate control means are provided between the receiver 24 and the exterior heat exchanger 2, between the air-conditioning heat exchanger 4A and the receiver 24, and between the cooling heat exchanger 4B and the receiver 24, respectively, on the liquid piping 12. The exterior heat exchanger 2 is provided with an exterior fan 3 for blowing external air.

To the air-conditioning circuit 91A are connected the interior heat exchanger 7A that exchanges heat with air blown out into the vehicle interior by an interior fan 8, a circulation pump 5A that circulates the air-conditioning cooling medium 41A, and the air-conditioning heat exchanger 4A in order in a circulating manner.

To the equipment cooling circuit 91B are connected an interior heat exchanger 7B that exchanges heat with air flown out from the interior heat exchanger 7A, a reservoir tank 6, a circulation pump 5B that circulates the equipment cooling medium 41B, the cooling heat exchanger 4B, an heat-generating body 9 such as a motor, an inverter, a battery or the like in order in a circulating manner. The equipment cooling circuit 91B is provided with a bypass circuit 30 that bypasses both ends of the interior heat exchanger 7B. The bypass circuit 30 is provided with a two-way valve 25 and a main circuit 31 that passes through the interior heat exchanger 7B is provided with a two-way valve 26. By switching actions of the two-way valves 25, 26, it is possible to arbitrarily configure the flow path of the equipment cooling medium 41B.

### (Air-heating operation)

According to the present embodiment, heat emission from the heat-generating body 9 is used for heating the vehicle interior during air-heating operation. In this case, if the air-heating load is low, air-heating is performed by using the heat emission form the heat-generating body 9 without using the refrigeration cycle circuit 90. If the heat emission from the heat-generating body 9 does not cover the air-heating load, the refrigeration cycle circuit 90 is used in combination.

When the air-heating is performed by using only the heat emission from the heat-generating body 9, the circulation pump 5B and the interior fan 8 are activated and the two-way valve 26 is opened to flow the equipment cooling medium 41B into the interior heat exchanger 7B. Since the equipment cooling medium 41B is heated by the heat-generating body 9, the equipment cooling medium 41B will be cooled by releasing heat to the air blown out into the vehicle interior in the interior heat exchanger 7B and thus the air blown out into the vehicle interior is heated.

On the other hand, when the heat emission from the heat-generating body 9 alone does not cover the air-heating load, the refrigeration cycle circuit 90 is used in combination. In this case, the four-way valve 20 is switched as indicated by a solid line to connect the discharge piping 10 of the compressor 1 with the air-conditioning heat exchanger 4A and the intake piping 11 with the exterior heat exchanger 2. That is, a cycling is formed in which the air-conditioning heat exchanger 41A serves as a condenser and the exterior heat exchanger serves as an evaporator.

The refrigerant 40 compressed by the compressor 1 is condensed and liquefied by releasing heat to the air-conditioning cooling medium 41A in the air-conditioning heat exchanger 4A. Thereafter, it is depressurized with an expansion valve 23 and exchanges heat with the external air in the exterior heat exchanger 2 to be evaporated, gasified and is returned to the compressor 1. Note that the expansion valve 22A is fully opened and the expansion valve 22B is fully closed and the cooling heat exchanger 4B is not used.

By activating the circulation pump 5A, the air-conditioning cooling medium 41A, which has gained condensation heat of the refrigerant 40 in the air-conditioning heat exchanger 4A and has an elevated temperature, is lead to flow into the interior heat exchanger 7A and releases heat to the air blown out there into the vehicle interior. The air heated by the interior heat exchanger 7A further gains heat from the equipment cooling medium 41B heated by the heat-generating body 9, in the interior heat exchanger 7B disposed on the side downstream of the flow of air, its temperature being further elevated and then blown out into the vehicle interior space.

According to this configuration, the air blown out into the vehicle interior, after it is heated by the refrigeration cycle circuit 90, is further heated by the heat emission from the heat-generating body 9. As a result, the temperature of the air blown out from the interior heat exchanger 7A is maintained at a temperature that is lower than the temperature of the air blown out from the interior heat exchanger 7B. That is, by using the heat emission from the heat-generating body 9 for air-heating, an air-conditioning apparatus with reduced energy consumption can be constructed.

### (Defrosting operation)

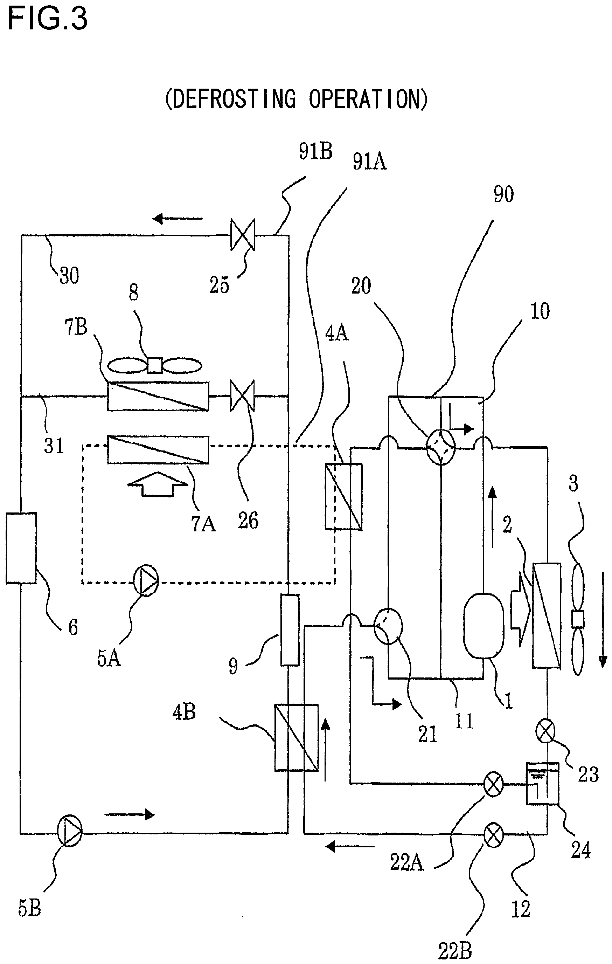

When the operation in which the exterior heat exchanger 2 is used as an evaporator is continued, it may sometimes happen that frost grows on a surface of the heat exchanger, and hence it becomes necessary to perform defrosting operation for melting the frost. During the defrosting operation, the four-way valve 20 and the three-way valve 21 are switched as indicated by solid lines in FIG. 3. Then, the expansion valve 22A is fully closed to form a cycling in which the exterior heat exchanger 2 serves as a condenser and the cooling heat exchanger 4B serves as an evaporator. On the other hand, the two-way valve 26 is closed to cut off the flow to the main circuit 3 land allows the equipment cooling medium 41B to flow into the bypass circuit 30.

Use of the air-conditioning heat exchanger 4A as an evaporator makes it easy to decrease the temperature of the air blown out into the vehicle interior. Accordingly, the heat emission from the heat-generating body 9 is used as a heat source, so that a reduction in temperature of the vehicle interior can be prevented. When the air blown out into the vehicle interior is used as a heat source, the amount of heat may not be sufficient, and therefore defrosting may take a longer time. However, since the equipment cooling medium 41B, which is maintained at a high temperature due to the heat-generating body 9 being connected with the system, can be used as a heat source for defrosting, advantageously, the heat source for defrosting can be secured so that the time for defrosting can be shortened. During the defrosting operation, a decrease in temperature can be prevented by controlling the amount of wind from the interior fan 8 or by stopping the interior fan 8.

### (Air-cooling operation)

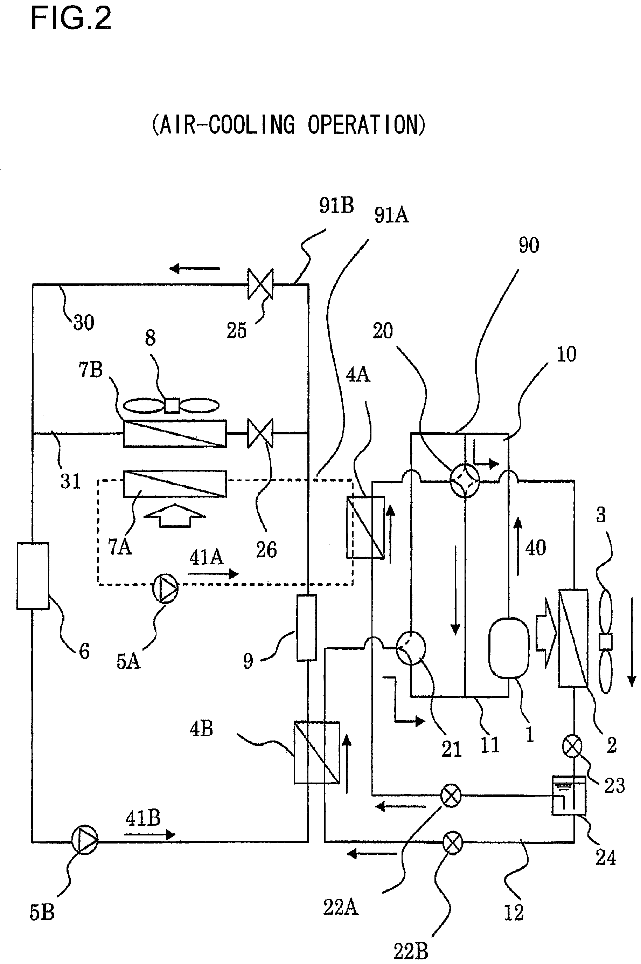

FIG. 2 is a diagram illustrating the action of the system at the time of air-cooling operation. Here, the term "air-cooling operation" means an operation mode in which both the air-conditioning circuit 91A and the equipment cooling circuit 91B are enabled to perform air-cooling. In the air-cooling operation, the exterior heat exchanger 2 is used as a condenser, and the air-conditioning heat exchanger 4A and the cooling heat exchanger 4B are used as evaporators, with the four-way valve 20 being brought into a condition indicated by a solid line.

The refrigerant 40 compressed by the compressor 1 releases heat in the exterior heat exchanger 2 to be liquefied and then branched into a portion of the refrigerant that flows into the air-conditioning heat exchanger 4A and a portion of the refrigerant that flows into the cooling heat exchanger 4B through the receiver 24. The portion of the refrigerant that flows into the air-conditioning heat exchanger 4A is depressurized by a depressurizing means 22A to become low in temperature and pressure and evaporates when it absorbs heat from the air-conditioning cooling medium 41A of the air-conditioning circuit 91A in the air-conditioning heat exchanger 4A, and passes through the four-way valve 20 and returns to the compressor 1. On the other hand, the portion of the refrigerant that flows into the cooling heat exchanger 4B is depressurized in a depressurizing means 22B to become low in temperature and pressure and absorbs heat from the equipment cooling medium 41B of the equipment cooling circuit 91B in the cooling heat exchanger 4B, passes through the three-way valve 21 and returns to the compressor 1.

When the circulation pump 5A provided in the air-conditioning circuit 91A is driven, the air-conditioning cooling medium 41A cooled by the air-conditioning heat exchanger 4A is supplied to the interior heat exchanger 7A. Then, when the interior fan 8 is driven, air cooled as a result of heat exchange in the interior heat exchanger 7A is blown out into the vehicle interior. When the circulation pump 5B provided in the equipment cooling circuit 91B is driven, the equipment cooling medium 41B heated by the heat-generating body 9 is cooled as a result of heat exchange in the cooling heat exchanger 4B. Note that during the air-cooling operation, the two-way valve 26 in the main circuit 31 is closed, so that the equipment cooling medium 41B that is at a high temperature flows through the bypass circuit 30. Note that during the air-cooling operation, the two-way valve 26 in the main circuit 31 is closed, so that the equipment cooling medium 41B that is at a high temperature flows through the bypass circuit 30.

In this manner, both the air-conditioning heat exchanger 4A and the cooling heat exchanger 4B can be used as evaporators, so that cooling of the vehicle interior and cooling of the heat-generating body 9 can be implemented simultaneously. Furthermore, since the air-conditioning heat exchanger 4A and the cooling heat exchanger 4B are connected in parallel to the intake piping 11 of the compressor 1 and the expansion valves 22A, 22B are provided to both the refrigerant circuits, the flow rates of the portions of the refrigerants that flow into the air-conditioning heat exchanger 4A and the cooling heat exchanger 4B, respectively, can be freely varied. As a result, the temperatures of the equipment cooling medium 41B and the air-conditioning cooling medium 41A can be controlled to any desired temperatures, respectively. Therefore, even when the temperature of the air-cooling medium 41A is sufficiently decreased in order to perform air-cooling, the temperature of the equipment cooling medium 41B in case that the heat-generating body 9 is connected can be maintained high by controlling the flow rate of the portion of the refrigerant that flows into the cooling heat exchanger 4B.

In order to efficiently use the heat emission from the heat-generating body 9 in the equipment cooling circuit 91B shown in FIG. 1, it is necessary as much as possible to reduce heat that dissipates from the heat-generating body 9 that is at a high temperature to the ambient and heat that dissipates from the piping for refrigerant flowing from the heat-generating body 9 to the interior heat exchanger 7B to the ambient. Accordingly, in the following, a construction for preventing heat-release form the heat-generating body 9 and the pipe for the refrigerant to the ambient are described.

### [First heat-release preventing structure]

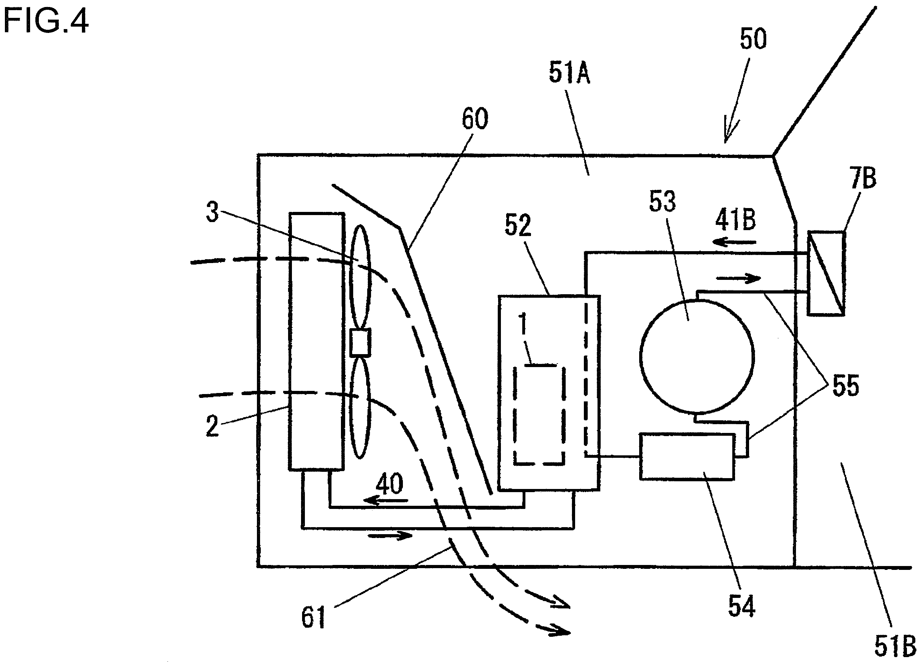

FIG. 4 is a diagram that shows an example of the heat-radiation suppressing structure, indicating the case in which it is applied to an electric vehicle. FIG. 4 schematically shows the arrangement of each equipment when a motor 53 for driving is mounted in the front portion of a vehicle 50. A space 51A in the vehicle 50 is a space that corresponds to an engine room in a conventional engine-driven vehicle. Hereafter, the space 51A is called a motor reception room and the space 51B is called a vehicle interior.

In each equipment shown in FIG. 1, equipment excluding the interior heat exchangers 7A, 7B and interior fan 8 is arranged in the motor reception room 51A shown in FIG. 2. FIG. 4 shows, as main equipments, a motor 53, an inverter 54 for controlling driving of the motor 53, a cooling unit 52, the exterior heat exchanger 2, and the exterior fan 3. The cooling unit 52 includes the equipment provided in the refrigeration cycle circuit 90 shown in FIG. 1 (the compressor 1, the heat exchangers 4A, 4B, the valves 20, 21 and so on) as well as the circulation pumps 5A, 5B and so on. The interior heat exchangers 7A, 7B and the interior fan 8 shown in FIG. 1 are arranged in the vehicle interior 51B. Note that in FIG. 4, the interior heat exchanger 7A and the interior fan 8 are omitted. In FIG. 4, the motor 53 and the inverter 54 correspond to the heat-generating body 9 in FIG. 1.

As shown in FIG. 4, the exterior heat exchanger 2 and the exterior fan 3 are arranged in the front most portions (on the left hand side in the FIG. 4) so that heat exchange with the external air can be efficiently performed. The cooling unit 52, the motor 53, the inverter 54 and so on is arranged to the rear of the exterior heat exchanger 2 and the exterior fan 3. As a result, a wind 61 caused by running of the vehicle and the exterior fan 3 passes through the exterior heat exchanger 2 and then is blown out to the cooling unit 52, the motor 53, the inverter 54, the piping 55 and so on arranged to the rear of the exterior heat exchanger 2.

Generally, the motor 53 and the inverter 54 is configured to allow release of heat from the casing made of a metal to ambient air in order to prevent temperature elevation. As a result, even when the cooling structure with the cooling medium 41B is employed, heat is radiated from the casing to the ambient air that directly comes in contact with the casing. Heat dissipates wastefully also from the piping 55, in which the equipment cooling medium 41B at a high temperature flows, to the ambient air by heat radiation.

As a result, the amount of heat released from the motor 53, the inverter 54 and the piping 55 to the ambient air increases, which hinders efficient utilization of the heat generated by the motor 53 and the inverter 54, which are heat-generating bodies, for air-heating of the vehicle interior. In particular, since the exterior heat exchanger 2 serves as an evaporator during the air-heating operation, external air is cooled when it passes through the exterior heat exchanger, so that the temperature of the external air becomes lower than the temperature of the external air at the beginning. Thus, wind of lower temperature than the external air is blown out to the motor 53, the inverter 54 and the piping 55.

Accordingly, in the first heat-radiation suppressing structure, a wall 60 is arranged between the cooling unit 52 and the exterior fan 8 as shown in FIG. 4 to provide a structure that prevents the wind 61 that has passed through the exterior heat exchanger 2 from being blown out to the cooling unit 52, the motor 53, the inverter 54, and the pipe 55. The wind 61 that has passed through the exterior heat exchanger 2 flows along the wall 60 obliquely in the direction of lower right, and discharged outside the vehicle from the bottom surface portion of the motor reception room 51A. As a result, the amount of heat radiated from the motor 53, the inverter 54 and the pipe 55 is decreased, thus making it possible to increase efficiency of utilization of the heat emission, and enableing a reduction in power consumption by the refrigeration cycle for air-heating.

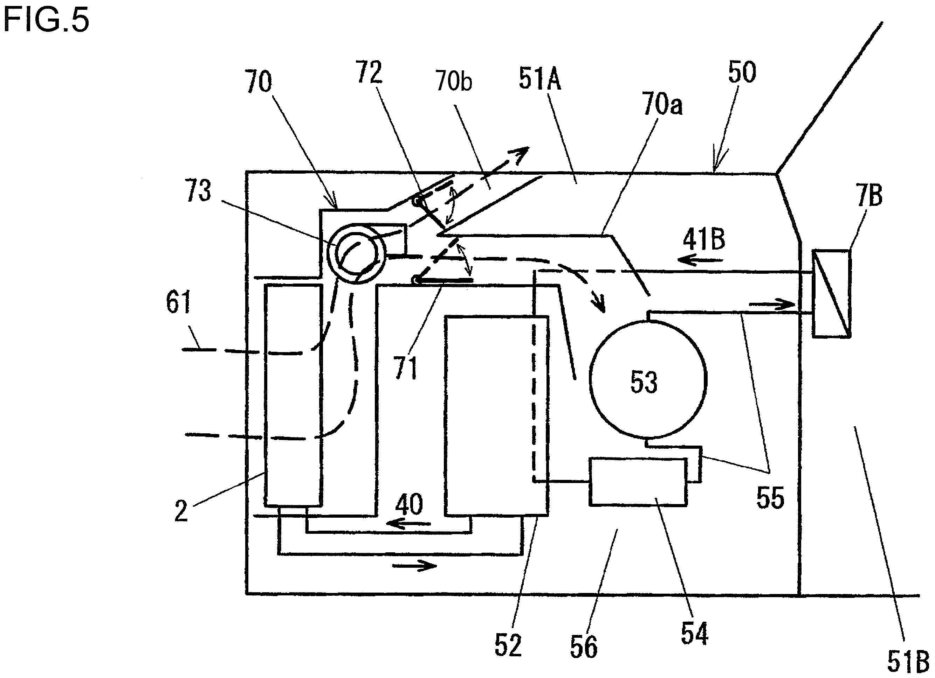

[Second heat-radiation suppressing structure] FIG. 5 is a diagram showing a second example of the heat-radiation suppressing structure. In the case of the first heat-radiation suppressing structure mentioned above, the flow of the wind 61 that has passed through the exterior heat exchanger 2 is varied by the wall 60, so that the wind 61 is prevented from being blown out to the motor 53, the inverter 54 and the piping 55, which are heat-generating bodies. On the other hand, in the case of the heat-radiation suppressing structure shown in FIG. 5, a duct 70 that accommodates the exterior heat exchanger 2 and the exterior fan 3 is provided in the motor reception space 51A in order to prevent the wind 61 from being blown out to the motor 53, the inverter 54 and the pipe 55, which are heat-generating bodies.

The duct 70 includes a cooling duct 70a and a discharging duct 70b. The cooling duct 70a guides the wind that has passed through the exterior heat exchanger 2 to the motor 53, the inverter 54, and batteries for driving (not shown). The discharging duct 70b discharges the wind that has passed through the exterior heat exchanger 2 to outside the vehicle. The ducts 70a, 70b are provided with dampers 71, 72, respectively, which are gates for adjusting the amount of wind. In the configuration shown in FIG. 5, a multi-blade fan (Sirocco fan) instead of a propeller fan is used as the exterior fan 3. By using a cylindrical multi-blade fan, the depth size (size in the front-back direction of the vehicle) of the duct 70 can be minimized.

During an air-heating operation, the damper 71 of the cooling duct 70a is closed whereas the damper 72 of the discharging duct 70b is opened. As a result, the wind 61 that has passed through the exterior heat exchanger 2 is discharged through the discharging duct 70b to outside the vehicle, so that it is not blown out to the motor 53, the inverter 54 and the pipe 55. Therefore, the heat radiation from the motor 53 and the inverter 54 is suppressed and the heat emission therefrom becomes to be used efficiently.

In the case where the temperature of external air is high as in summer seasons, further cooling becomes necessary in order to prevent the heat-generating body from gaining a too high temperature. In such a case, the damper 72 is closed and the damper 71 is opened as shown in FIG. 5 to allow the wind from the exterior fan 3 to be blown out to the heat-generating body to increase heat dissipation therefrom. As mentioned above, during a air-cooling operation, the equipment cooling medium 41B for cooling the heat-generating body is cooled by the refrigerant 40 in the refrigeration cycle circuit 90 in the cooling heat exchanger 4B. As a result, by cooling the heat-generating body by the wind from the exterior fan 3 as shown in FIG. 5, the cooling load for the refrigeration cycle circuit 90 can be controlled, thus enabling decrease of power consumption.

If the wind 61 is blown onto the exterior heat exchanger 2 during the above-mentioned defrosting operation, the temperature of the exterior heat exchanger 2 becomes hard to be increased, so that it becomes difficult to melt the frost. Then, during the defrosting operation, the exterior fan 3 is stopped and the dampers 71, 72 are closed in order to make it difficult for the wind 61 to flow through the exterior heat exchanger 2.

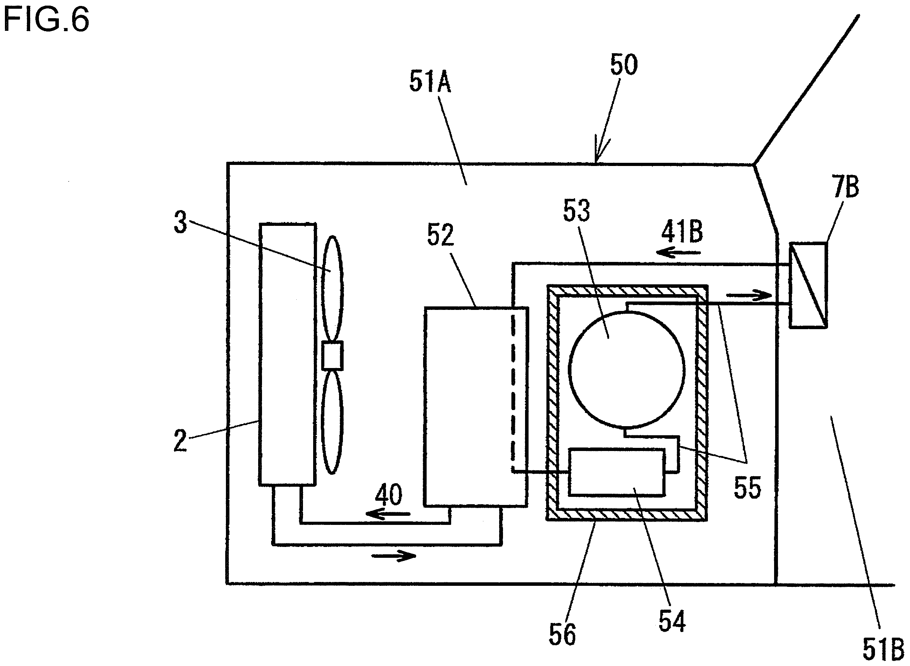

[Third heat-radiation suppressing structure] FIG. 6 is a diagram showing an example of a third heat-radiation suppressing structure. In the case of the first and second heat-radiation suppressing structures, the wind 61 that has passed through the exterior heat exchanger 2 is prevented from being blown out to the motor 53, the inverter 54, and the piping 55, which are heat-generating bodies, for decreasing the amount of heat dissipated therefrom by providing the wall 60 or the duct 70.

The motor 53 and the inverter 54 have a structure that allows heat to be radiated via their casings made of metal to the ambient air as mentioned above. As a result, even when a structure is adopted with which the wind 61 that has passed through the exterior heat exchanger 2 is not blown out to the motor 53 and the inverter 54, heat is dissipated to the ambient air. Accordingly, in the third heat-radiation suppressing structure, the motor 53 and the inverter 54, which are heat-generating bodies and the piping 55 in which the equipment cooling medium 41B of high temperature flows are accommodated in the casing 56 for suppressing heat radiation so as to decrease heat dissipated from the heat-generating bodies to the air in the motor reception room 51A.

By providing the casing 56, it is prevented that the motor 53, the inverter 54 and the pipe 55 are exposed to the wind 61 that has passed through the exterior heat exchanger 2, so that similar effect to that given by the wall 61as shown in FIG. 2 is obtained. Furthermore, since the air surrounding the motor 53, the inverter 54 and the piping 55 is separated from the air in the motor reception room 51A by the casing 56, heat transfer from the air in the casing 56 to the air in the motor reception room 51A is done only via thermal conduction through the casing 56. As a result, the heat radiation from the motor 53, the inverter 54 and the piping 55 may be decreased more than the case where they are arranged as exposed in the motor reception room 51A as shown in FIG. 2.

Though the material that constitutes the casing 56 is preferably a heat insulating material, it may be a metal. The casing 56 may be of a double-walled structure, with which a sufficient heat insulation effect can be obtained even when the casing 56 is made of metallic material.

Though all of the motor 53, the inverter 54 and the pipe 55 are accommodated in one casing 56 in FIG. 6, each pieces of the equipment may be enclosed by a casing made of an heat insulating material or the surface of each pieces of the equipment may be covered with an heat insulating material. Instead of using a casing structure such as the casing 56, the surface of each pieces of the equipment may be coated with an heat insulating material (for example, a resin) to form a layer of the heat insulting material on the surface of the motor 53, the inverter 54 and the pipe 55. Furthermore, such an heat insulating structure and the above-mentioned wall 60 may be used together.

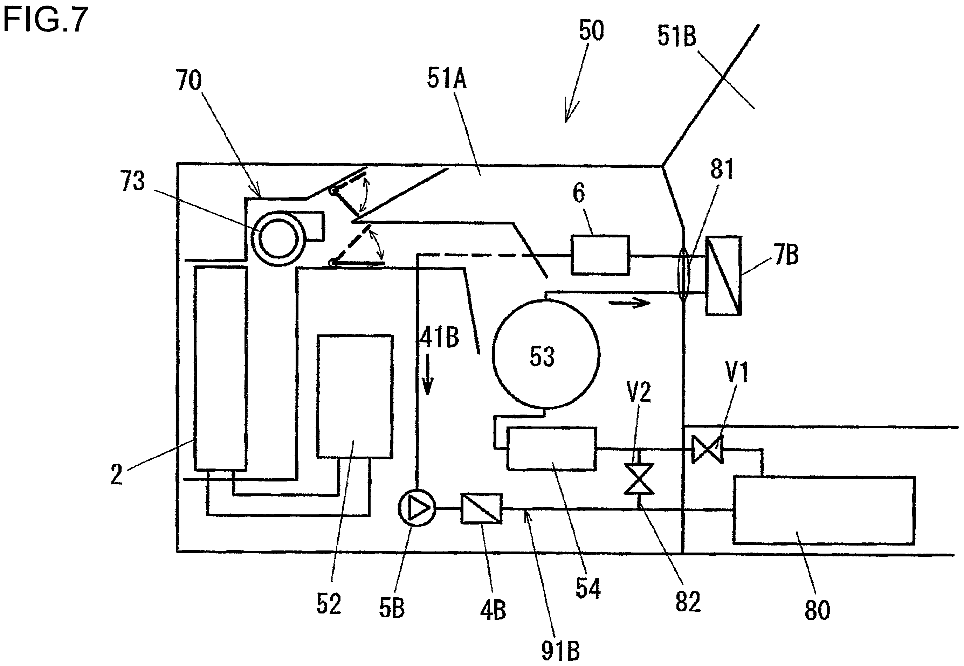

[Fourth heat-radiation suppressing structure] FIG. 7 is a diagram showing a fourth example of the heat-radiation suppressing structure. In the fourth heat-radiation suppressing structure, by appropriately modifying the layout of each equipment provided in the equipment cooling circuit 91B shown in FIG. 1, the length of the piping in which the equipment cooling medium 41B having a relatively high temperature flows is made smaller to suppress the heat radiation from the piping. Note that according to the construction shown in FIG. 7, the duct 70 is provided in order that the wind from the exterior fan is not blown out to the motor 53. However, a construction which do not include the duct 70 and the wall 60 may be used.

The arrangement of each equipment as shown in FIG. 7 is determined based on the guiding principle indicated below.
(1) Along the flow of equipment cooling medium 41B, a circulation pump 5B, a cooling heat exchanger 4B, an heat-generating body, and an interior heat exchanger 7B are connected in order.
(2) The piece of the equipment that has an outlet of the equipment cooling medium 41B located at the highest position is arranged at the most downstream side between the circulation pump 5B and the interior heat exchanger 7B, i.e., near the interior heat exchanger 7B.
(3) The piece of the equipment that has the largest amount of heat generation is arranged at the most downstream position between the circulation pump 5B and the interior heat exchanger 7B.
(4) The circulation pump 5B is arranged to the front part of the vehicle from the heat-generating body.

The guiding principle (1) is settled based on the following reason. Taking into consideration the function of the reservoir tank 6, it is preferred that the reservoir tank 6 is provided on the intake side of the circulation pump 5B. Furthermore, the reservoir tank 6 needs to be located at the highest position in the equipment cooling circuit 91B. On the other hand, the circulation pump 5B for circulating the equipment cooling medium 41B is provided preferably at the lowest position. A communication hole 81 through which the piping to the interior heat exchanger 7B provided in the vehicle interior 51B is arranged at a relatively high position in the motor reception room 51A. Accordingly, by providing the reservoir tank 6 on the downstream side of the interior heat exchanger 7B, the reservoir tank 6 can be arranged at a high position and the piping can be shorter.

For example, let us consider a case in which the reservoir tank 6 is not arranged on the downstream side of the interior heat exchanger 7B and the cooling heat exchanger 4B, the reservoir tank 6, and the circulation pump 5B are connected in order. In this case, since it is preferred that the cooling heat exchanger 4B that has a relatively large weight, the piping is arranged from the cooling heat exchanger 4B at a lower position to once the reservoir tank 6 that is at a higher position and then it is arranged again to the circulation pump 5 that is at a lower position. As a result, the piping length is increased to cause the heat radiation from the piping to increase.

Regarding the guiding principle (2), the communication hole 81 related to the interior heat exchanger 7B is provided at a relatively high position. Accordingly, by connecting the piece of the equipment that has an outlet of refrigerant at a high position on the most downstream side, that is, on the upstream side of the interior heat exchanger 7B, the piping between the piece of the equipment and the interior heat exchanger 7B can be shorter. In the case of the present embodiment, the motor 53 having a large size is connected on the upstream side of the interior heat exchanger 7B. Since the equipment cooling medium 41B of a high temperature flows through the piping on the upstream side of the interior heat exchanger 7B, a reduction in the amount of heat dissipation can be decreased by shorter piping.

The guiding principle (3) is based on the following reason. The larger the amount of heat generation of the equipment is, the higher the temperature of the equipment cooling medium 41B that flows out of the equipment is. As a result, by arranging the piece of the equipment that has the largest amount of heat generation at the most downstream side, the length of the piping through which the equipment cooling medium 41B that has the highest temperature can be shorter. In the case such an arrangement is adopted, the length of the piping on the upstream side of the piece of the equipment concerned is increased. However, the temperature of the refrigerant can be maintained at a relatively lower level on the upstream side of the piece of the equipment concerned, so that the total heat dissipation from the piping can be decreased.

Taking into consideration the guiding principle (4) in addition to the guiding principle (3), the heat-generating bodies are arranged in series between the circulation pump 5B placed at a lower position and the interior heat exchanger 7B placed at a higher position. That is, it is possible to avoid the arrangement of the piping from going backward in the front-back direction of the vehicle, so that the total length of the piping in which equipment cooling medium 41B having a high temperature flows can be shorter. When such an arrangement of the piping is employed, the length of the piping from the reservoir tank 6 to the circulation pump 5B becomes relatively large. However, because in this piping flows the equipment cooling medium 41B that has released heat in the interior heat exchanger 7B flows, the temperature of the refrigerant is relatively low, causing less adverse effect of heat loss.

The arrangement of each component in FIG. 7 is set up according to the above-mentioned guiding principles (1) to (4) and the piping connection is done from the reservoir tank 6 that is arranged at the highest position near the through hole 81 to the circulation pump 5B arranged on the side of the front portion of the vehicle in the equipment cooling circuit 91B. On the downstream side of the circulation pump 5B is connected the cooling heat exchanger 4B. The cooling heat exchanger 4B is arranged at a low position like the circulation pump 5B and a plurality of heat-generating bodies are arranged in an ascending order regarding heat generation amount between the cooling heat exchanger 4B and the interior heat exchanger 7B located at a high position.

In the above-mentioned embodiment, the battery 80 for driving, as an heat-generating body, is omitted. However, in the example shown in FIG. 7, the battery 80 for driving is provided as a heat-generating body in addition to the motor 53 and the inverter 54. A two-way valve V1 is provided between the battery 80 for driving and the inverter 54, and a bypass circuit 82 provided with a two-way valve V2 is arranged in parallel to the battery 80 for driving. Usually, the two-way valve V1 is closed and at the same time the two-way valve V2 is opened to flow the equipment cooling medium 41B to bypass the battery 80 for driving. Since the temperature of the battery 80 for driving increases during charging, the two-way valve V1 is opened and at the same time the two-way valve V2 is closed to cool the battery 80 for driving with the equipment cooling medium 41B,whereby the heat is utilized for air-heating of the vehicle interior. Of course, cooling is performed even when it is not a time of charging, if it is expected that the temperature of the battery will exceed allowable temperature of the battery 80 for driving.

The battery 80 for driving shown in FIG. 7 operates most efficiently when the temperature of battery is 50 to 60°C. On the other hand, when external air temperature is considerably low such as in particular in winter seasons, a low temperature state may continue for a while after the vehicle is started, so that there may be a case that the maximum capacity of the battery 80 for driving cannot be attained. Accordingly, the equipment cooling circuit 91B may be provided with a heater in order to heat the equipment cooling medium 41B by the heater up to an optimal temperature in case the temperature of the equipment cooling medium 41B is too low. In this case, it is simplest and most desirable to provide a heater to the reservoir tank 6. By turning the heater on to elevate quickly the temperature of the equipment cooling medium 41B to the optimal temperature, the capacity of the battery 80 for driving can be fully exploited immediately after the starting up of the vehicle.

As described above, the air-conditioning system for a vehicle according to the present embodiment comprises the refrigeration cycle circuit 90 that includes the compressor 1 for compressing the refrigerant 40 and the exterior heat exchanger 2 for exchanging heat between the refrigerant 40 and external air and that performs air-conditioning of air in the vehicle interior, the air-conditioning circuit 91, and the equipment cooling circuit 91B that circulates the equipment cooling medium 41B among the motor 53, an equipment for electrically driving the vehicle, the inverter 54 and the like, and the interior heat exchanger 7B, and that releases heat absorbed from the equipment to the air in the vehicle interior with the interior heat exchanger 7B. As a heat-radiation suppressing means that suppresses heat dissipation from the equipment to surrounding environment, the casing 56 made of an heat insulating material covering the equipment is provided; the wall 60 or duct 70 is provided as a shielding member that shields the equipment from the wind 61; or a layout of a plurality of pieces of equipment (motor 53, inverter 54, and battery 80 for driving) as shown in FIG. 7 is arranged such that a piece of equipment having a larger amount of heat generation is placed at more downstream of the flow of the equipment cooling medium 41B and a piece of equipment having the largest amount of heat generation is placed in the vicinity of the interior heat exchanger 7B.

By providing such a heat-radiation suppressing means, the heat emission from the heat-generating body (motor 53, inverter 54, battery 80 for driving) can be efficiently used for air-conditioning of the vehicle interior.

The above-mentioned embodiments may be used alone or in any combination. This is because the respective advantageous effects of the embodiments can be exhibited alone or synergistically. So far as the features of the present invention are not impaired, the present invention is not limited to the above-mentioned embodiments.

Although in the foregoing, various embodiments and variations thereof have been explained, the present invention should not be construed as being limited thereto. Other aspects conceived within the technical concept of the present invention are included in the scope of the present invention. as defined in the appended claims.

## Claims

1. An air-conditioning system for a vehicle comprising:
an air-conditioning apparatus (90, 91A) having a compressor (1) that compresses a first refrigerant (40) and a first heat exchanger (2) that exchanges heat between the first refrigerant (40) and external air and performing temperature regulation of air in a vehicle interior (51B) of the vehicle; and
an equipment cooling apparatus (91B) that circulates a second refrigerant (41B) between equipment for electrically driving the vehicle and a second heat exchanger (7B) to release heat absorbed from the equipment to the air in the vehicle interior (51B) in the second heat exchanger (7B),
**characterized in that**
the air-conditioning system further comprises a heat-radiation suppressing structure that suppresses heat dissipation from the equipment to surrounding environment;
the equipment for electrically driving the vehicle includes a motor (53), an inverter (54) and a battery (80);
the battery (80), the inverter (54) and the motor (53) are arranged from an upstream side to a downstream side of a flow of the second refrigerant (41B) in order of the battery (80), the inverter (54) and the motor (53) so that a piece of the equipment having a larger amount of heat generation is arranged at a position further downstream in the flow of the second refrigerant (41B);
the equipment cooling apparatus (91B) releases heat absorbed from the equipment, heat dissipation of which to the surrounding environment is suppressed, and the air-conditioning apparatus (90, 91A) performs temperature regulation of air in the vehicle interior (51B);
the battery (80) is disposed below the vehicle interior (51B);
the motor (53) and the inverter (54) are disposed in a motor reception room (51A) that is different from the vehicle interior (51B) and is exposed to the external air; and
the heat-radiation suppressing structure includes a heat insulating member (56) that covers the motor (53) and the inverter (54), and the heat insulating member (56) is a casing for accommodating the motor (53) and the inverter (54).

2. An air-conditioning system for a vehicle according to claim 1, wherein
the heat-radiation suppressing structure comprises a shielding member that is provided between the first heat exchanger (2) and the equipment and shields the equipment from external air that has passed through the first heat exchanger (2).

3. An air-conditioning system for a vehicle according to claim 2, wherein
the shielding member comprises a duct that accommodates therein the first heat exchanger (2),
the duct including a first channel for guiding external air that has passed through the first heat exchanger (2) to the equipment, a second channel for discharging the external air that has passed through the first heat exchanger (2) to outside the vehicle, and a wind distributing unit that switches between the first and second channels to distribute the external air that has passed through the first heat exchanger (2).

4. An air-conditioning system for a vehicle according to any one of claims 1 to 3, further comprising a third heat exchanger that exchanges heat between the first refrigerant (40) and the second refrigerant (41B).

## Patentansprüche

1. Klimatisierungssystem für ein Fahrzeug, das Folgendes umfasst:
eine Klimatisierungsvorrichtung (90, 91A) mit einem Kompressor (1), der ein erstes Kühlmittel (40) komprimiert, und einem ersten Wärmetauscher (2), der Wärme zwischen dem ersten Kühlmittel (40) und Außenluft austauscht und eine Temperaturregulierung der Luft in einem Fahrzeuginnenraum (51B) des Fahrzeugs ausführt; und
eine Ausrüstungskühlungsvorrichtung (91B), die ein zweites Kühlmittel (41B) zwischen Ausrüstung für den elektrischen Antrieb des Fahrzeugs und einem zweiten Wärmetauscher (7B) umwälzt, um in dem zweiten Wärmetauscher (7B) Wärme, die von der Ausrüstung absorbiert wird, an die Luft im Fahrzeuginnenraum (51B) abzugeben,
**dadurch gekennzeichnet, dass**
das Klimatisierungssystem ferner eine Wärmeabstrahlungsunterdrückungsstruktur aufweist, die eine Wärmeabführung von der Ausrüstung an die Umgebung unterdrückt;
die Ausrüstung für den elektrischen Antrieb des Fahrzeugs einen Motor (53), einen Inverter (54) und eine Batterie (80) enthält;
die Batterie (80), der Inverter (54) und der Motor (53) von der stromaufwärtigen Seite zu der stromabwärtigen Seite einer Strömung des zweiten Kühlmittels (41B) in der Reihenfolge Batterie (80), Inverter (54), Motor (53) angeordnet sind, so dass ein Teil der Ausrüstung, der einen größeren Wärmeerzeugungsbetrag aufweist, an einer weiter stromabwärtigen Position in der Strömung des zweiten Kühlmittels (51B) angeordnet ist;
die Ausrüstungskühlungsvorrichtung (91B) Wärme, die von der Ausrüstung absorbiert wird, freisetzt, wobei die Abführung der Wärme hiervon an die Umgebung unterdrückt wird, und die Klimatisierungsvorrichtung (90, 91A) eine Temperaturregulierung von Luft in dem Fahrzeuginnenraum (51B) ausführt;
die Batterie (80) unter dem Fahrzeuginnenraum (51B) angeordnet ist;
der Motor (53) und der Inverter (54) in einem Motoraufnahmeraum (51A) angeordnet sind, der von dem Fahrzeuginnenraum (51B) verschieden ist und zu der Außenluft freiliegt; und
die Wärmeabstrahlungsunterdrückungsstruktur ein Wärmeisolationselement (56) aufweist, das den Motor (53) und den Inverter (54) abdeckt, und das Wärmeisolationselement (56) ein Gehäuse für die Aufnahme des Motors (53) und des Inverters (54) ist.

2. Klimatisierungssystem für ein Fahrzeug nach Anspruch 1, wobei
die Wärmeabstrahlungsunterdrückungsstruktur ein Abschirmungselement aufweist, das zwischen dem ersten Wärmetauscher (2) und der Ausrüstung vorgesehen ist und die Ausrüstung vor äußerer Luft, die sich durch den ersten Wärmetauscher (2) bewegt hat, abschirmt.

3. Klimatisierungssystem für ein Fahrzeug nach Anspruch 2, wobei
das Abschirmungselement eine Rohrleitung aufweist, die darin den ersten Wärmetauscher (2) aufnimmt,
die Rohrleitung einen ersten Kanal zum Führen von äußerer Luft, die sich durch den ersten Wärmetauscher (2) bewegt hat, zu der Ausrüstung, einen zweiten Kanal zum Ausstoßen der äußeren Luft, die sich durch den ersten Wärmetauscher (2) bewegt hat, in die äußere Umgebung des Fahrzeugs und eine Windverteilungseinheit, die zwischen dem ersten und dem zweiten Kanal umschaltet, um die äußere Luft, die sich durch den ersten Wärmetauscher (2) bewegt hat, zu verteilen, umfasst.

4. Klimatisierungssystem für ein Fahrzeug nach einem der Ansprüche 1 bis 3, das ferner einen dritten Wärmetauscher umfasst, der Wärme zwischen dem ersten Kühlmittel (40) und dem zweiten Kühlmittel (41B) austauscht.

## Revendications

1. Système de conditionnement d'air pour un véhicule, comprenant :
un appareil de conditionnement d'air (90, 91A) ayant un compresseur (1) qui comprime un premier réfrigérant (40) et un premier échangeur de chaleur (2) qui échange de la chaleur entre le premier réfrigérant (40) et l'air extérieur et qui exécute une régulation de température de l'air dans l'intérieur (51B) du véhicule ; et
un appareil de refroidissement pour équipement (91B) qui fait circuler un second réfrigérant (41B) entre un équipement pour le fonctionnement électrique du véhicule et un second échangeur de chaleur (7B) pour dégager la chaleur absorbée depuis l'équipement vers l'air à l'intérieur (51B) du véhicule dans le second échangeur de chaleur (7B),
**caractérisé en ce que**
le système de conditionnement d'air comprend en outre une structure de suppression de rayonnement thermique qui supprime la dissipation de chaleur depuis l'équipement vers l'environnement ambiant ;
l'équipement pour le fonctionnement électrique du véhicule inclut un moteur (53), un inverseur (54) et une batterie (80) ;
la batterie (80), l'inverseur (54) et le moteur (53) sont agencés depuis un côté amont vers un côté aval d'un écoulement du second réfrigérant (41B) dans l'ordre de la batterie (80), de l'inverseur (54) et du moteur (53), de sorte qu'une partie de l'équipement ayant une génération de chaleur en quantité importante est agencée à une position plus loin en aval dans l'écoulement du second réfrigérant (41B) ;
l'appareil de refroidissement pour équipement (91B) dégage la chaleur absorbée depuis l'équipement, ce qui supprime la dissipation de chaleur de celui-ci vers l'environnement ambiant, et l'appareil de conditionnement d'air (90, 91A) effectue une régulation de température de l'air dans l'intérieur du véhicule (51B) ;
la batterie (80) est disposée au-dessous de l'intérieur du véhicule (51B) ;
le moteur (53) et l'inverseur (54) sont disposés dans un compartiment de réception (51A) pour le moteur qui est différent de l'intérieur (51B) du véhicule et qui est exposé à l'air extérieur ; et
la structure de suppression de rayonnement thermique inclut un élément thermiquement isolant (56) qui couvre le moteur (53) et l'inverseur (54), et l'élément thermiquement isolant (56) est un boîtier pour loger le moteur (53) et l'inverseur (54).

2. Système de conditionnement d'air pour un véhicule selon la revendication 1, dans lequel
la structure de suppression de rayonnement thermique comprend un élément écran qui est prévu entre le premier échangeur de chaleur (2) et l'équipement et qui fait écran pour l'équipement vis-à-vis de l'air extérieur qui est passé à travers le premier échangeur de chaleur (2).

3. Système de conditionnement d'air pour un véhicule selon la revendication 2, dans lequel
l'élément écran comprend un conduit qui loge à l'intérieur le premier échangeur de chaleur (2),
le conduit inclut un premier canal pour guider l'air extérieur qui est passé à travers le premier échangeur de chaleur (2) vers l'équipement, un second canal pour décharger l'air extérieur qui est passé à travers le premier échangeur de chaleur (2) vers l'extérieur du véhicule, et une unité de distribution d'air qui commute entre le premier et le second canal pour distribuer l'air externe qui est passé à travers le premier échangeur de chaleur (2).

4. Système de conditionnement d'air pour un véhicule selon l'une quelconque des revendications 1 à 3, comprenant en outre un troisième échangeur de chaleur qui échange de la chaleur entre le premier réfrigérant (40) et le second réfrigérant (41B).
